# EUROPEAN PATENT APPLICATION

(11) **EP 4 783 533 A1**
(43) Date of publication of application: **29.07.2026**
(21) Application number: 24870412.4
(22) Date of filing: 06.09.2024
(51) Int. Cl.: H04L 41/147, H04L 41/14, H04W 24/02

(54) **NETWORK MANAGEMENT METHOD AND APPARATUS**

(30) Priority: 27.09.2023 CN 202311270785
(71) Applicant: HUAWEI TECHNOLOGIES CO., LTD., Shenzhen 518129 (CN)
(72) Inventor: CHENG, Wenjie, Shenzhen, Guangdong 518129 (CN); ZHU, Zheqi, Shenzhen, Guangdong 518129 (CN); ZENG, Yu, Shenzhen, Guangdong 518129 (CN)
(74) Representative: Pfenning, Meinig & Partner mbB
(86) International application number: PCT/CN2024/117447
(87) International publication number: WO 2025/066866

(57) **Abstract**

Embodiments of this application provide a network management method and apparatus, and relate to the field of communication technologies. The network management method is applied to a first node performing information prediction in a communication network, and includes: obtaining reference data and current measurement information that match a network management scenario, where the reference data indicates prediction quality of at least one prediction model that matches the scenario; processing the current measurement information by using each prediction model in the at least one prediction model, to obtain current prediction information corresponding to the prediction model; and sending the current prediction information corresponding to each prediction model and a quality indicator of the current prediction information to a second node in the communication network. In this way, the second node performs a network management operation for the scenario based on current prediction information whose quality indicator satisfies a quality condition and that is in the current prediction information corresponding to each prediction model. In embodiments of this application, quality evaluation may be performed on prediction information, to improve network performance and user experience.

## Description

This application claims priority to Chinese Patent Application No. 202311270785.X, filed with the China National Intellectual Property Administration on September 27, 2023 and entitled "NETWORK MANAGEMENT METHOD AND APPARATUS", which is incorporated herein by reference in its entirety.

### TECHNICAL FIELD

Embodiments of this application relate to the field of communication technologies, and in particular, to a network management method and apparatus.

### BACKGROUND

Artificial intelligence (artificial intelligence, AI) is a technology for performing complex computing by simulating a human brain, and is widely used for data analysis. For example, it is proposed in the 3rd generation partnership project (3rd Generation Partnership Project, 3GPP) R17 release to apply AI to new radio (new radio, NR, also referred to as new radio, namely, a 5G radio network) to analyze measurement information, so as to obtain prediction information (for example, prediction information of a resource status and prediction information of a track of a user equipment (UE)), where the prediction information may be used to improve network performance and user experience. The measurement information may include information that is obtained through measurement in a communication network and that can be used to obtain the prediction information, for example, information such as load information and a user position.

In a related technology, a node in a communication network (for example, NR), for example, a 5G base station (gNB), usually collects measurement information used to obtain prediction information, processes the collected measurement information based on an AI technology (for example, a machine learning model obtained through pre-training), to obtain the prediction information, and then performs network management operations such as network energy saving, load balancing, and mobility optimization based on the prediction information.

However, the prediction information obtained based on the AI technology may be inaccurate. As a result, the network management operations performed based on the prediction information are prone to be inaccurate, causing a problem that network performance and user experience cannot be improved.

### SUMMARY

To resolve the foregoing technical problems, this application provides a network management method. In the method, a node in a communication network may determine more accurate prediction information by determining quality indicators of different prediction information, to perform a more accurate network management operation, thereby improving network performance and user experience.

According to a first aspect, an embodiment of this application provides a network management method, applied to a first node performing information prediction in a communication network. The method includes: obtaining reference data and current measurement information that match a network management scenario, where the reference data indicates prediction quality of at least one prediction model that matches the scenario; processing the current measurement information by using each prediction model in the at least one prediction model, to obtain current prediction information corresponding to the prediction model; determining, based on the reference data, a quality indicator of the current prediction information corresponding to each of the at least one prediction model; and performing a network management operation for the scenario based on current prediction information whose quality indicator satisfies a quality condition.

In this embodiment of this application, the first node in the communication network may obtain the reference data that matches the network management scenario, where the reference data indicates the prediction quality of the at least one prediction model that matches the scenario. Further, the first node may determine, based on the reference data, the quality indicator of the current prediction information corresponding to each of the at least one prediction model, that is, evaluate quality (for example, accuracy and/or precision) of prediction information currently obtained by each prediction model, and send an evaluation result to a second node in the communication network. Based on this, the second node performs the network management operation based on the current prediction information whose quality indicator satisfies the quality condition, to avoid performing a network operation based on inaccurate prediction information, thereby improving network performance and user experience.

According to the first aspect, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

In this embodiment of this application, one of the preset test set, the quality indicator of the historical prediction information, the historical prediction information, and the prediction assistance information may be used to evaluate prediction information before actual information corresponding to predicted network information is generated, to ensure network management performed based on more accurate prediction information, thereby improving network performance and user experience.

According to the first aspect or any implementation of the first aspect, the reference information includes the preset test set; and determining, based on the reference data, the quality indicator of the current prediction information corresponding to each of the at least one prediction model includes: processing the test measurement information by using each prediction model, to obtain test prediction information corresponding to the prediction model; and performing, for each prediction model based on the test prediction information corresponding to the prediction model, the test prediction information corresponding to the test measurement information, and the actual information corresponding to the test prediction information, quality evaluation on the test prediction information corresponding to the prediction model, to obtain the quality indicator of the current prediction information corresponding to the prediction model.

In this embodiment of this application, a quality indicator of the preset test set approximately represents the quality indicator of the current prediction information, so that the prediction information is evaluated before the actual information corresponding to the predicted network information is generated, to ensure network management performed based on more accurate prediction information, thereby improving network performance and user experience.

According to the first aspect or any implementation of the first aspect, the reference information includes the preset test set; and obtaining the reference data that matches the network management scenario includes one of the following steps: reading the preset test set stored in the first node; receiving the preset test set sent by a third node, where the third node is a node that is different from the first node and the second node and that is in the communication network; and receiving the preset test set sent by the second node.

In this embodiment of this application, the first node may obtain the preset test set from the third node or the second node, to ensure that quality evaluation may be subsequently performed on the current prediction information based on the preset test set.

According to the first aspect or any implementation of the first aspect, the reference information includes the preset test set; and obtaining the reference data that matches the network management scenario includes: receiving an original test set sent by a third node, where the third node is a node that is different from the first node and the second node and that is in the communication network, the original test set includes a plurality of test sets, and each test set includes test measurement information, test prediction information corresponding to the test measurement information, and actual information corresponding to the test prediction information; receiving evaluation requirement information sent by the second node; and determining, as the preset test set, a test set that satisfies the evaluation requirement information and that is in the original test set.

In this embodiment of this application, when the third node sends the original test set, the first node may determine, from the original test set based on the evaluation requirement information sent by the second node, the preset test set that satisfies an evaluation requirement of the second node, to ensure that subsequent quality evaluation performed on the prediction information based on the preset test set better satisfies the requirement of the second node.

According to the first aspect or any implementation of the first aspect, the reference information includes the quality indicator of the historical prediction information; and determining, based on the reference data, the quality indicator of the current prediction information corresponding to each of the at least one prediction model includes: determining, for each prediction model as the quality indicator of the current prediction information corresponding to the prediction model, a quality indicator that is in the quality indicator of the historical prediction information and that corresponds to the prediction model.

In this embodiment of this application, the quality indicator of the historical prediction information approximately represents the quality indicator of the current prediction information, so that the prediction information is evaluated before the actual information corresponding to the predicted network information is generated, to ensure network management performed based on more accurate prediction information, thereby improving network performance and user experience.

According to the first aspect or any implementation of the first aspect, the reference information includes the quality indicator of the historical prediction information; and obtaining the reference data that matches the network management scenario includes: obtaining the quality indicator of the historical prediction information in a fourth node, where the fourth node is a node that is in the communication network and to which the first node has historically sent prediction information for the scenario; or when the first node has historically performed information prediction for the scenario, reading the quality indicator of the historical prediction information stored in the first node.

In this embodiment of this application, when the historical prediction information exists in the fourth node, a quality indicator of historical network information may be obtained from the fourth node. When the historical prediction information exists in the first node, the first node may directly read the quality indicator of the historical network information stored in the first node, to ensure that the quality indicator of the current prediction information can be subsequently determined by using the quality indicator of the historical prediction information.

According to the first aspect or any implementation of the first aspect, the reference information includes the historical prediction information; and determining, based on the reference data, the quality indicator of the current prediction information corresponding to each of the at least one prediction model includes: inputting, for each prediction model, historical prediction information corresponding to the prediction model or the current prediction information corresponding to the prediction model into an evaluation model obtained through pre-training, to obtain the quality indicator of the current prediction information corresponding to the prediction model, where the evaluation model is a model obtained through training by using the historical network information and the quality indicator of the historical network information.

In this embodiment of this application, the quality indicator of the current prediction information is obtained by using the evaluation model obtained through pre-training, so that the prediction information is evaluated before the actual information corresponding to the predicted network information is generated, to ensure network management performed based on more accurate prediction information, thereby improving network performance and user experience.

According to the first aspect or any implementation of the first aspect, the reference information includes the historical prediction information; and obtaining the reference data that matches the network management scenario includes: obtaining an adjacent node of the first node, historical prediction information that matches the network management scenario and that is in the first node, and the quality indicator of the historical prediction information.

In this embodiment of this application, the first node may obtain, from the first node and the adjacent node, namely, a node adjacent to the first node, the historical prediction information used to obtain the evaluation model through training. In this way, the historical prediction information can be obtained more efficiently, thereby improving efficiency of evaluating the prediction information.

According to the first aspect or any implementation of the first aspect, after determining, based on the reference data, the quality indicator of the current prediction information corresponding to each of the at least one prediction model, the method further includes: when sending the current prediction information corresponding to each prediction model to the second node in the communication network, sending a reservation indication of the current prediction information corresponding to each prediction model to the second node.

In this embodiment of this application, the second node is indicated to reserve the received prediction information, so that the first node can obtain the historical prediction information when performing quality evaluation on the prediction information, to ensure that the network management operation is performed based on the more accurate prediction information, thereby improving network performance and user experience.

According to the first aspect or any implementation of the first aspect, before obtaining the reference data that matches the network management scenario, the method further includes: receiving a prediction evaluation indication sent by the second node, where the prediction evaluation indication indicates information about a requirement of the second node for a quality indicator of prediction information; and obtaining, based on the prediction evaluation indication, the reference data that matches the network management scenario.

In this embodiment of this application, the prediction evaluation indication may indicate the information about the requirement of the second node for the quality indicator of the prediction information. In this way, the reference data that is obtained by the first node based on the prediction evaluation indication and that matches the network management scenario better satisfies the quality evaluation requirement of the second node for the prediction information. The quality evaluation requirement includes, for example, whether to perform quality evaluation, and accuracy and/or precision conditions of the prediction information.

According to the first aspect or any implementation of the first aspect, the reference data includes the prediction assistance information; obtaining the reference data that matches the network management scenario includes: obtaining the prediction assistance information based on the at least one prediction model; and determining, based on the reference data, the quality indicator of the current prediction information corresponding to each of the at least one prediction model includes: determining, for each prediction model as the quality indicator of the current prediction information corresponding to the prediction model, the attribute information and/or the running environment that are/is of the prediction model and that are/is indicated by the prediction assistance information.

In this embodiment of this application, the first node implicitly indicates the quality indicator of the current prediction information by using the prediction assistance information that matches the network management scenario, to ensure that network management may be subsequently performed based on more accurate current prediction information, thereby improving network performance and user experience.

According to a second aspect, an embodiment of this application provides a network management method, applied to a second node using prediction information in a communication network. The method includes: receiving current prediction information that is sent by a first node performing information prediction in the communication network and that corresponds to each prediction model in at least one prediction model, and a quality indicator of the current prediction information; and performing a network management operation for a scenario based on current prediction information whose quality indicator satisfies a quality condition and that is in the current prediction information corresponding to each prediction model, where the quality indicator of the current prediction information corresponding to each prediction model is determined by the first node based on reference data that matches the network management scenario, the reference data indicates prediction quality of at least one prediction model that matches the scenario, and the prediction model is used to perform information prediction.

According to the second aspect, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

According to the second aspect or any implementation of the second aspect, the reference data includes the preset test set; and before receiving the current prediction information that is sent by the first node performing information prediction in the communication network and that corresponds to each prediction model in the at least one prediction model, and the quality indicator of the current prediction information, the method further includes: sending the preset test set to the first node; or sending evaluation requirement information to the first node.

According to the second aspect or any implementation of the second aspect, the reference information includes the quality indicator of the historical prediction information or the historical prediction information; and the method further includes: when receiving the current prediction information that is sent by the first node performing information prediction in the communication network and that corresponds to each prediction model in the at least one prediction model, further receiving a reservation indication that is sent by the first node and that is for the current prediction information corresponding to each prediction model.

According to the second aspect or any implementation of the second aspect, the reference information includes the quality indicator of the historical prediction information or the historical prediction information; and before receiving the current prediction information that is sent by the first node performing information prediction in the communication network and that corresponds to each prediction model in the at least one prediction model, and the quality indicator of the current prediction information, the method further includes: sending a prediction evaluation indication to the first node, where the prediction evaluation indication indicates information about a requirement of the second node for a quality indicator of prediction information.

According to the second aspect or any implementation of the second aspect, the reference data includes the prediction assistance information; and performing the network management operation for the scenario based on the current prediction information whose quality indicator satisfies the quality condition and that is in the current prediction information corresponding to each prediction model includes: determining a prediction requirement for the scenario; determining, for each prediction model based on a degree of matching between prediction assistance information corresponding to the prediction model and the prediction requirement, the current prediction information whose quality indicator satisfies the quality condition and that is in the current prediction information corresponding to each prediction model; and performing the network management operation for the scenario based on the current prediction information whose quality indicator satisfies the quality condition.

The second aspect and any implementation of the second aspect respectively correspond to the first aspect and any implementation of the first aspect. For technical effects corresponding to the second aspect and any implementation of the second aspect, refer to technical effects corresponding to the first aspect and any implementation of the first aspect. Details are not described herein again.

According to a third aspect, an embodiment of this application provides a network management method, applied to a communication network, where the communication network includes a first node performing information prediction and a second node using prediction information, and the method includes: The first node is configured to: obtain reference data and current measurement information that match a network management scenario, where the reference data indicates prediction quality of at least one prediction model that matches the scenario; process the current measurement information by using each prediction model in the at least one prediction model, to obtain current prediction information corresponding to the prediction model; determine, based on the reference data, a quality indicator of the current prediction information corresponding to each of the at least one prediction model; and send the current prediction information corresponding to each prediction model and the quality indicator of the current prediction information to the second node in the communication network. The second node is configured to perform a network management operation for the scenario based on current prediction information whose quality indicator satisfies a quality condition and that is in the current prediction information corresponding to each prediction model.

According to the third aspect, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again.

According to a fourth aspect, an embodiment of this application provides a network management apparatus, used in a first node performing information prediction in a communication network, where the apparatus includes: an information obtaining module, configured to: obtain reference data and current measurement information that match a network management scenario, where the reference data indicates prediction quality of at least one prediction model that matches the scenario; and process the current measurement information by using each prediction model in the at least one prediction model, to obtain current prediction information corresponding to the prediction model; a quality evaluation module, configured to determine, based on the reference data, a quality indicator of the current prediction information corresponding to each of the at least one prediction model; and an information sending module, configured to send the current prediction information corresponding to each prediction model and the quality indicator of the current prediction information to a second node in the communication network, where the second node is configured to perform a network management operation for the scenario based on current prediction information whose quality indicator satisfies a quality condition and that is in the current prediction information corresponding to each prediction model.

According to the fourth aspect, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

According to the fourth aspect or any implementation of the fourth aspect, the reference information includes the preset test set; and the quality evaluation module is specifically configured to: process the test measurement information by using each prediction model, to obtain test prediction information corresponding to the prediction model; and perform, for each prediction model based on the test prediction information corresponding to the prediction model, the test prediction information corresponding to the test measurement information, and the actual information corresponding to the test prediction information, quality evaluation on the test prediction information corresponding to the prediction model, to obtain the quality indicator of the current prediction information corresponding to the prediction model.

According to the fourth aspect or any implementation of the fourth aspect, the reference information includes the preset test set; and the information obtaining module is specifically configured to perform one of the following steps: reading the preset test set stored in the first node; receiving the preset test set sent by a third node, where the third node is a node that is different from the first node and the second node and that is in the communication network; and receiving the preset test set sent by the second node.

According to the fourth aspect or any implementation of the fourth aspect, the reference information includes the preset test set; and the information obtaining module is specifically configured to: receive an original test set sent by a third node, where the third node is a node that is different from the first node and the second node and that is in the communication network, the original test set includes a plurality of test sets, and each test set includes test measurement information, test prediction information corresponding to the test measurement information, and actual information corresponding to the test prediction information; receive evaluation requirement information sent by the second node; and determine, as the preset test set, a test set that satisfies the evaluation requirement information and that is in the original test set.

According to the fourth aspect or any implementation of the fourth aspect, the reference information includes the quality indicator of the historical prediction information; and the quality evaluation module is specifically configured to: determine, for each prediction model as the quality indicator of the current prediction information corresponding to the prediction model, a quality indicator that is in the quality indicator of the historical prediction information and that corresponds to the prediction model.

According to the fourth aspect or any implementation of the fourth aspect, the reference information includes the quality indicator of the historical prediction information; and the information obtaining module is specifically configured to: obtain the quality indicator of the historical prediction information in a fourth node, where the fourth node is a node that is in the communication network and to which the first node has historically sent prediction information for the scenario; or when the first node has historically performed information prediction for the scenario, read the quality indicator of the historical prediction information stored in the first node.

According to the fourth aspect or any implementation of the fourth aspect, the reference information includes the historical prediction information; and the quality evaluation module is specifically configured to: input, for each prediction model, historical prediction information corresponding to the prediction model or the current prediction information corresponding to the prediction model into an evaluation model obtained through pre-training, to obtain the quality indicator of the current prediction information corresponding to the prediction model, where the evaluation model is a model obtained through training by using the historical network information and a quality indicator of the historical network information.

According to the fourth aspect or any implementation of the fourth aspect, the reference information includes the historical prediction information; and the information obtaining module is specifically configured to: obtain an adjacent node of the first node, historical prediction information that matches the network management scenario and that is in the first node, and the quality indicator of the historical prediction information.

According to the fourth aspect or any implementation of the fourth aspect, the information sending module is further configured to: when sending the current prediction information corresponding to each prediction model to the second node in the communication network, send a reservation indication of the current prediction information corresponding to each prediction model to the second node.

According to the fourth aspect or any implementation of the fourth aspect, the information obtaining module is specifically configured to: receive a prediction evaluation indication sent by the second node, where the prediction evaluation indication indicates information about a requirement of the second node for a quality indicator of prediction information; and obtain, based on the prediction evaluation indication, the reference data that matches the network management scenario.

According to the fourth aspect or any implementation of the fourth aspect, the reference data includes the prediction assistance information; obtaining the reference data that matches the network management scenario includes: obtaining the prediction assistance information based on the at least one prediction model; and the quality evaluation module is specifically configured to: determine, for each prediction model as the quality indicator of the current prediction information corresponding to the prediction model, the attribute information and/or the running environment that are/is of the prediction model and that are/is indicated by the prediction assistance information.

The fourth aspect and any implementation of the fourth aspect respectively correspond to the first aspect and any implementation of the first aspect. For technical effects corresponding to the fourth aspect and any implementation of the fourth aspect, refer to technical effects corresponding to the first aspect and any implementation of the first aspect. Details are not described herein again.

According to a fifth aspect, an embodiment of this application provides a network management apparatus, used in a second node using prediction information in a communication network, where the apparatus includes: an information receiving module, configured to receive current prediction information that is sent by a first node performing information prediction in the communication network and that corresponds to each prediction model in at least one prediction model, and a quality indicator of the current prediction information; and an information application module, configured to perform a network management operation for a scenario based on current prediction information whose quality indicator satisfies a quality condition and that is in the current prediction information corresponding to each prediction model, where the quality indicator of the current prediction information corresponding to each prediction model is determined by the first node based on reference data that matches the network management scenario, the reference data indicates prediction quality of at least one prediction model that matches the scenario, and the prediction model is used to perform information prediction.

According to the fifth aspect, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

According to the fifth aspect or any implementation of the fifth aspect, the reference data includes the preset test set; and the apparatus further includes: an information sending module, configured to: before the information receiving module receives the current prediction information that is sent by the first node performing information prediction in the communication network and that corresponds to each prediction model in the at least one prediction model, and the quality indicator of the current prediction information, send the preset test set to the first node; or send evaluation requirement information to the first node.

According to the fifth aspect or any implementation of the fifth aspect, the reference information includes the quality indicator of the historical prediction information or the historical prediction information; and the information receiving module is further configured to: when receiving the current prediction information that is sent by the first node performing information prediction in the communication network and that corresponds to each prediction model in the at least one prediction model, further receive a reservation indication that is sent by the first node and that is for the current prediction information corresponding to each prediction model.

According to the fifth aspect or any implementation of the fifth aspect, the reference information includes the quality indicator of the historical prediction information or the historical prediction information; and the apparatus further includes: an information sending module, configured to: before the information receiving module receives the current prediction information that is sent by the first node performing information prediction in the communication network and that corresponds to each prediction model in the at least one prediction model, and the quality indicator of the current prediction information, send a prediction evaluation indication to the first node, where the prediction evaluation indication indicates information about a requirement of the second node for a quality indicator of prediction information.

According to the fifth aspect or any implementation of the fifth aspect, the reference data includes the prediction assistance information; and the information application module is specifically configured to: determine a prediction requirement for the scenario; determine, for each prediction model based on a degree of matching between prediction assistance information corresponding to the prediction model and the prediction requirement, the current prediction information whose quality indicator satisfies the quality condition and that is in the current prediction information corresponding to each prediction model; and perform the network management operation for the scenario based on the current prediction information whose quality indicator satisfies the quality condition.

The fifth aspect and any implementation of the fifth aspect respectively correspond to the first aspect and any implementation of the first aspect. For technical effects corresponding to the fifth aspect and any implementation of the fifth aspect, refer to technical effects corresponding to the first aspect and any implementation of the first aspect. Details are not described herein again.

According to a sixth aspect, this application provides a communication network, where the communication network includes a first node performing information prediction and a second node using prediction information. The first node is configured to: obtain reference data and current measurement information that match a network management scenario, where the reference data indicates prediction quality of at least one prediction model that matches the scenario; process the current measurement information by using each prediction model in the at least one prediction model, to obtain current prediction information corresponding to the prediction model; determine, based on the reference data, a quality indicator of the current prediction information corresponding to each of the at least one prediction model; and send the current prediction information corresponding to each prediction model and the quality indicator of the current prediction information to the second node in the communication network. The second node is configured to perform a network management operation for the scenario based on current prediction information whose quality indicator satisfies a quality condition and that is in the current prediction information corresponding to each prediction model.

According to the sixth aspect, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

The sixth aspect and any implementation of the sixth aspect respectively correspond to the first aspect and any implementation of the first aspect. For technical effects corresponding to the sixth aspect and any implementation of the sixth aspect, refer to the technical effects corresponding to the first aspect and any implementation of the first aspect. Details are not described herein again.

According to a seventh aspect, an embodiment of this application provides an electronic device, including a processor and a memory. The processor is connected to the memory. The memory is configured to store one or more programs. When the one or more programs are executed by one or more processors, the one or more processors are enabled to implement the method according to any one of the first aspect to the third aspect and the implementations of the first aspect to the third aspect.

According to an eighth aspect, an embodiment of this application provides a computer-readable medium, configured to store a computer program. The computer program includes instructions for performing the method according to any one of the first aspect to the third aspect or the possible implementations of the first aspect to the third aspect.

According to a ninth aspect, an embodiment of this application provides a computer program. The computer program includes instructions for performing the method according to any one of the first aspect to the third aspect or the possible implementations of the first aspect to the third aspect.

According to a tenth aspect, an embodiment of this application provides a chip. The chip includes a processing circuit and a transceiver pin. The transceiver pin and the processing circuit communicate with each other through an internal connection path. The processing circuit performs the method according to any one of the first aspect to the third aspect or the possible implementations of the first aspect to the third aspect, to control a receiving pin to receive a signal, and control a sending pin to send a signal.

### BRIEF DESCRIPTION OF DRAWINGS

To describe the technical solutions in embodiments of this application more clearly, the following briefly introduces the accompanying drawings required for describing embodiments of this application. It is clear that the accompanying drawings in the following description show merely some embodiments of this application, and a person of ordinary skill in the art may still derive other drawings from these accompanying drawings without creative efforts.
FIG. 1 is a block diagram of application of artificial intelligence in new radio;
FIG. 2 is a block diagram of a structure of a network device according to an embodiment of this application;
FIG. 3a is a block diagram of a structure of a network management apparatus according to an embodiment of this application;
FIG. 3b is a block diagram of a structure of a network management apparatus according to an embodiment of this application;
FIG. 3c is a block diagram of a structure of a communication network according to an embodiment of this application;
FIG. 4 is a schematic flowchart of a network management method according to an embodiment of this application;
FIG. 5a is an example diagram of a data collection process according to an embodiment of this application;
FIG. 5b is an example diagram of a data collection process according to an embodiment of this application;
FIG. 5c is an example diagram of a data collection process according to an embodiment of this application;
FIG. 6 is a schematic flowchart of a network management method according to an embodiment of this application;
FIG. 7 is a schematic flowchart of a network management method according to an embodiment of this application;
FIG. 8 is a schematic flowchart of a network management method according to an embodiment of this application; and
FIG. 9 is a schematic flowchart of a network management method according to an embodiment of this application.

### DESCRIPTION OF EMBODIMENTS

The following describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object and a second target object are intended to distinguish between different target objects, but not to indicate a specific order of the target objects.

In embodiments of this application, the word "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units are two or more than two processing units, and a plurality of systems are two or more than two systems.

To facilitate understanding of embodiments of this application, the following first describes some background technologies in embodiments of this application.

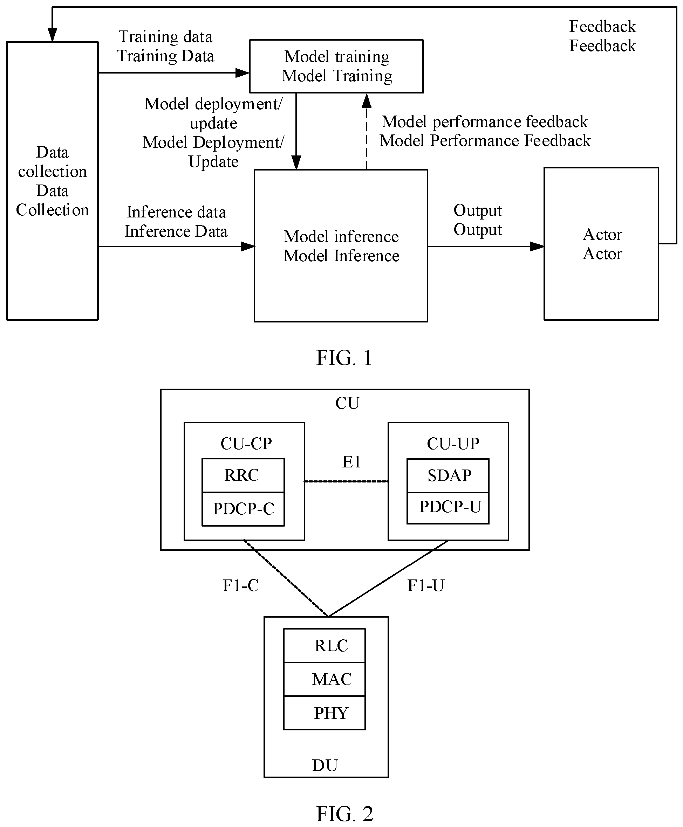

For example, FIG. 1 is a block diagram of application of artificial intelligence in new radio. As shown in FIG. 1, in the 3GPP R17 release, an SI (Study Item) is passed, and it is proposed to apply artificial intelligence (AI) to NR. Network performance and user experience are improved through artificial intelligence-based data collection and data analysis. Data collection (data collection) includes storing data from a node, for example, a gNB (a 5G base station), a gNB-CU (a central unit (central unit) of the 5G base station), a gNB-DU (a distributed unit (distributed unit) of the 5G base station), a UE (user equipment), or another management entity, as a database for AI model training and data analysis and inference. A model training node (model training host) performs model training by using training data (training data), and provides an optimal AI model, that is, obtains an AI model (for example, a neural network model or a support vector machine (support vector machine, SVM)) through training. A model inference node (model inference host) uses the AI model to perform analysis and inference on data provided by data collection, thereby implementing AI-based proper prediction on network running and adjusting network policies. Related policy adjustment may be planned by an actor (actor) node, namely, an execution entity, and sent to a plurality of network entities for running, that is, applying related policies, to implement network management. Specific performance generated after a network applies a related policy may be input into the database again for storage, that is, fed back. In an example, the model training node may further perform model training based on model performance feedback sent by the model inference node to obtain a better AI model, and perform model deployment/update to ensure that the model inference node can use the better AI model.

However, prediction information obtained through prediction by using an AI technology may be inaccurate. As a result, network management operations performed based on the prediction information are prone to be inaccurate, causing a problem that network performance and user experience cannot be improved.

Embodiments of this application provide a network management method, to resolve the foregoing problem. In the method, a node in a communication network may obtain reference data that matches a network management scenario, where the reference data indicates prediction quality of at least one prediction model that matches the scenario. Further, the node in the communication network may determine, based on the reference data, a quality indicator of current prediction information corresponding to each of the at least one prediction model, that is, evaluate quality (for example, accuracy and/or precision) of prediction information currently obtained by each prediction model. Based on this, the node in the communication network performs a network management operation based on current prediction information whose quality indicator satisfies a quality condition, to avoid performing a network operation based on inaccurate prediction information, thereby improving network performance and user experience.

Before the technical solutions in embodiments of this application are described, a running platform of the network management method in embodiments of this application is first described with reference to the accompanying drawings. Embodiments of this application may be applied to a node in a communication network. The communication network may be, for example, any communication network related to an AI application scenario, such as a 4G system, a 5G system, or an NTN system (non-terrestrial network, non-terrestrial network). During specific implementation of embodiments of this application, the node may be, for example, a terminal device or a network device.

The terminal device is a device having a wireless transceiver function. The terminal device may be deployed on land, including being deployed indoor or outdoor, handheld, or vehicle-mounted, may be deployed on water (for example, on a ship), or may be deployed in air (for example, on an airplane, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a user equipment (user equipment, UE), and the like.

The network device is a device in a wireless network, for example, a radio access network (radio access network, RAN) node through which the terminal device accesses the wireless network. The RAN node may be, for example, a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or integrated access and backhaul (integrated access and backhaul, IAB).

For example, FIG. 2 is a block diagram of a structure of a network device according to an embodiment of this application. As shown in FIG. 2, in a network structure, the network device may be a central unit (central unit, CU) or a distributed unit (distributed unit, DU), or the network device may be a device including a CU and a DU. The CU and the DU may be understood as units obtained by dividing the base station from a perspective of a logical function. It may be understood that the base station is divided into the CU and the DU from the perspective of a logical function. The CU and the DU may be physically separated, or may be deployed together. This is not specifically limited in embodiments of this application. In an example, one CU may be connected to one DU, or a plurality of DUs may share one CU, to reduce costs and facilitate network expansion.

The CU and the DU may be split based on a protocol stack. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed on the CU, and a remaining radio link control (radio link control, RLC) layer, a media access control (media access control, MAC) layer, and a physical layer are deployed on the DU. The foregoing protocol stack splitting manner is not limited in embodiments of this application. Any protocol stack splitting manner that can be used for a network device including a CU and a DU may be used in this application. In an example, the CU and the DU may be connected through an F1 interface (an open terrestrial interface). The CU indicates that a gNB is connected to a core network through an Ng interface.

Still refer to FIG. 2. The network device in embodiments of this application may be a central unit-control plane (CU-CP) node or a central unit-user plane (CU-UP) node. Alternatively, the network device may include a CU-CP and a CU-UP. The CU-CP is responsible for a control plane function, and mainly includes RRC and a PDCP-C. The PDCP-C is mainly responsible for data encryption and decryption, integrity protection, data transmission, and the like on the control plane. The CU-UP is responsible for a user plane function, and mainly includes an SDAP and PDCP-U. The SDAP is mainly responsible for processing data of the core network and mapping a flow to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP indicates that the gNB is connected to the core network through an Ng interface, and is connected to the DU through F1-C (control plane). The CU-UP is connected to the DU through F1-U (user plane). Certainly, in another possible implementation, the PDCP-C is also in the CU-UP.

The access network device mentioned in embodiments of this application may be a device including at least one of a CU and a DU, or a device including a control plane CU node (a CU-CP node), a user plane CU node (a CU-UP node), and a DU node.

The radio access network device and the terminal device may be deployed on land, including being deployed indoor or outdoor, handheld, or vehicle-mounted, may be deployed on water, or may be deployed on an airplane, a balloon, or a satellite in air. A specific application scenario of the radio access network device and the terminal device are not limited in embodiments of this application.

Embodiments of this application may be applied to downlink signal transmission, may be applied to uplink signal transmission, or may be applied to device-to-device (device-to-device, D2D) signal transmission. For the downlink signal transmission, a sending device is the radio access network device, and correspondingly, a receiving device is the terminal device. For the uplink signal transmission, a sending device is the terminal device, and correspondingly, a receiving device is the radio access network device. For the D2D signal transmission, a sending device is a terminal device, and correspondingly, a receiving device is also a terminal device. A signal transmission direction is not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. Communication between the radio access network device and the terminal device and communication between the terminal devices may be performed by using a spectrum below 6 gigahertz (gigahertz, GHz), namely, 6G, or a spectrum above 6G, or both a spectrum below 6G and a spectrum above 6G. Spectrum resources used by the radio access network device and the terminal device are not limited in embodiments of this application.

It should be understood that the network device shown in FIG. 2 is merely an example of the network device, and the network device may have more or fewer components than those shown in the figure, or may combine two or more components, or may have different component configurations. Various components shown in FIG. 2 may be implemented in hardware including one or more signal processing and/or application-specific integrated circuits, software, or a combination of hardware and software.

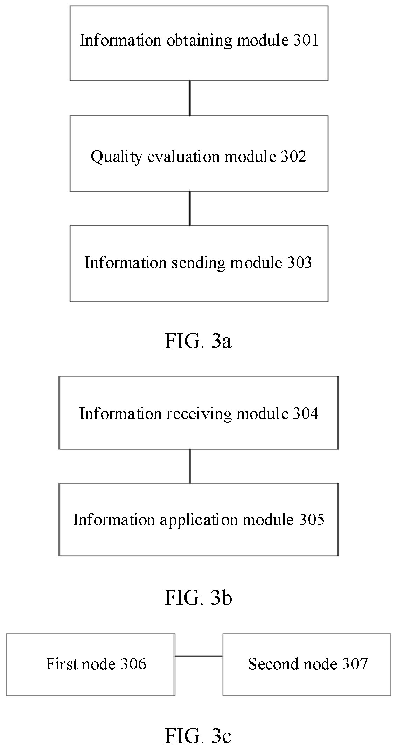

For example, FIG. 3a is a block diagram of a structure of a network management apparatus according to an embodiment of this application. As shown in FIG. 3a, the apparatus is used in a first node performing information prediction in a communication network, and may include a information obtaining module 301, an quality evaluation module 302, and an information sending module 303.

The information obtaining module 301 is configured to: obtain reference data and current measurement information that match a network management scenario, where the reference data indicates prediction quality of at least one prediction model that matches the scenario; and process the current measurement information by using each prediction model in the at least one prediction model, to obtain current prediction information corresponding to the prediction model.

The quality evaluation module 302 is configured to determine, based on the reference data, a quality indicator of the current prediction information corresponding to each of the at least one prediction model.

The information sending module 303 is configured to send the current prediction information corresponding to each prediction model and the quality indicator of the current prediction information to a second node in the communication network, where the second node is configured to perform a network management operation for the scenario based on current prediction information whose quality indicator satisfies a quality condition and that is in the current prediction information corresponding to each prediction model.

For example, FIG. 3b is a block diagram of a structure of a network management apparatus according to an embodiment of this application. As shown in FIG. 3b, the network management apparatus is used in a second node using prediction information in a communication network. The apparatus includes:
an information receiving module 304, configured to receive current prediction information that is sent by a first node performing information prediction in the communication network and that corresponds to each prediction model in at least one prediction model, and a quality indicator of the current prediction information; and
an information application module 305, configured to perform a network management operation for the scenario based on current prediction information whose quality indicator satisfies a quality condition and that is in the current prediction information corresponding to each prediction model.

The quality indicator of the current prediction information corresponding to each prediction model is determined by the first node based on reference data that matches the network management scenario, the reference data indicates prediction quality of at least one prediction model that matches the scenario, and the prediction model is used to perform information prediction.

It should be understood that the apparatuses shown in FIG. 3a and FIG. 3b are merely examples of the network management apparatus, and the network management apparatus may have more or fewer components than those shown in the figure, or may combine two or more components, or may have different component configurations. Various components shown in FIG. 3a and FIG. 3b may be implemented in hardware including one or more signal processing and/or application-specific integrated circuits, software, or a combination of hardware and software.

For example, FIG. 3c is a block diagram of a structure of a communication network according to an embodiment of this application. As shown in FIG. 3c, the communication network includes a first node 306 performing information prediction and a second node 307 using prediction information.

The first node 306 is configured to: obtain reference data and current measurement information that match a network management scenario, where the reference data indicates prediction quality of at least one prediction model that matches the scenario; process the current measurement information by using each prediction model in the at least one prediction model, to obtain current prediction information corresponding to the prediction model; determine, based on the reference data, a quality indicator of the current prediction information corresponding to each of the at least one prediction model; and send the current prediction information corresponding to each prediction model and the quality indicator of the current prediction information to the second node in the communication network.

The second node 307 is configured to perform a network management operation for the scenario based on current prediction information whose quality indicator satisfies a quality condition and that is in the current prediction information corresponding to each prediction model.

In specific application, there may be one or more first nodes 306 and second nodes 307. For example, the first node 306 and the second node 307 may be terminals or network devices. This is not specifically limited in embodiments of this application.

It should be understood that the network shown in FIG. 3c is merely an example of the communication network, and the communication network may have more or fewer components than those shown in the figure, or may combine two or more components, or may have different component configurations. Various components shown in FIG. 3c may be implemented in hardware including one or more signal processing and/or application-specific integrated circuits, software, or a combination of hardware and software.

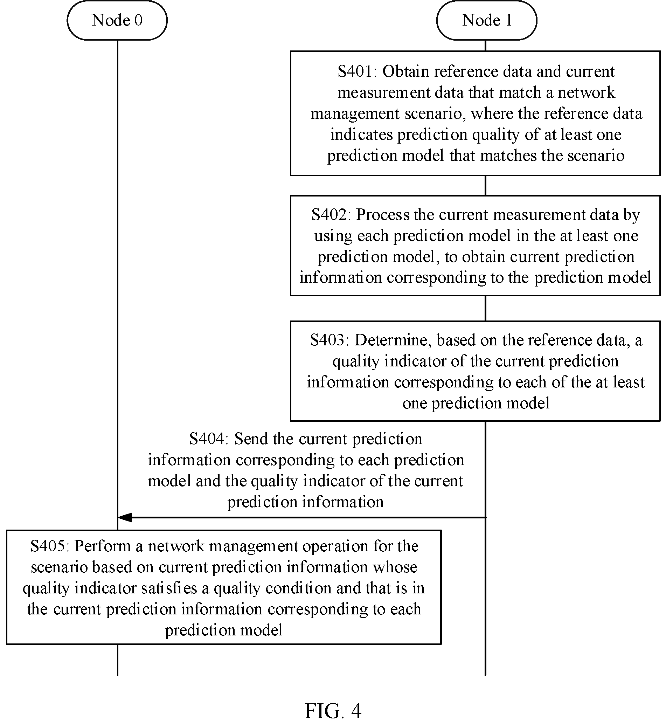

For ease of understanding, the following specifically described the network management method provided in embodiments of this application with reference to FIG. 4 to FIG. 9.

For example, FIG. 4 is a schematic flowchart of a network management method according to an embodiment of this application. As shown in FIG. 4, the network management method provided in this embodiment of this application is applied to a node in a communication network. The method may include the following steps.

S401: A node 1 obtains reference data and current measurement information that match a network management scenario, where the reference data indicates prediction quality of at least one prediction model that matches the scenario.

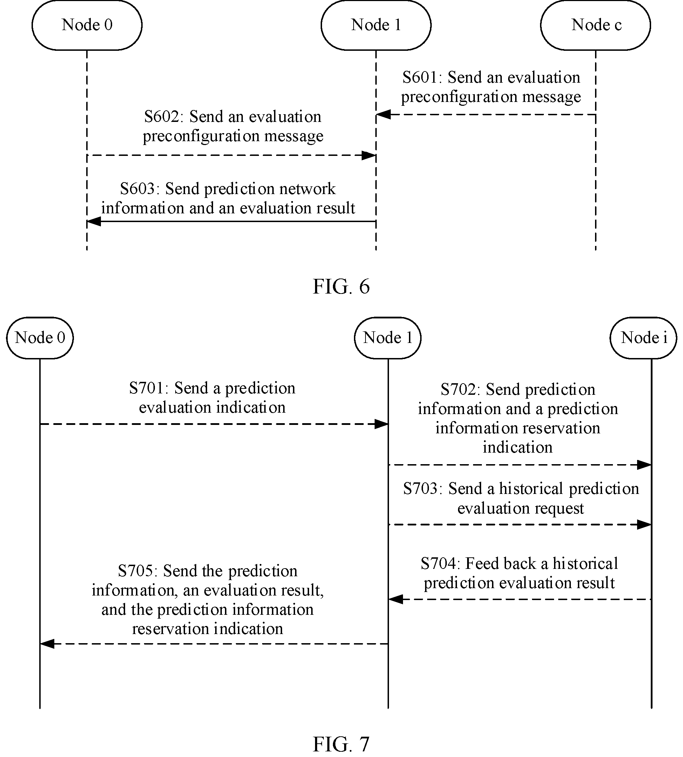

For details about a first node and a second node, refer to the descriptions in the embodiment in FIG. 2. Details are not described herein again. In an optional implementation, the reference data may include one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model. For proper layout, this is specifically described below with reference to FIG. 6 to FIG. 9.

For ease of understanding and description, an application of AI to a RAN side is still used as an example for description. There may be a plurality of application scenarios, namely, network management scenarios, of AI in a communication network. For example, in a RAN 3, the scenarios may include a network energy saving (network energy saving) scenario, a load balancing (load balancing) scenario, a mobility optimization (mobility optimization) scenario, and the like. The current measurement information that matches the network management scenario is measurement information used to obtain current prediction information, and the current prediction information is used to perform network management on the scenario. In other words, the measurement information is an input of a prediction model. The current is time at which quality evaluation is performed and the second node performs requesting in embodiments of this application. The following describes a network management process in the three scenarios.

Network energy saving: Network energy saving may be performed to resolve problems of high energy consumption, carbon dioxide emission, and operating expense (OPEX) caused by rapid increasing of base stations in a communication network, and may involve different layers of the network, with mechanisms running on different time scales. Cell activation/deactivation is a space-domain energy saving solution in which hierarchical traffic steering is used to reduce energy consumption of an entire radio access network (RAN). When an expected traffic volume is lower than a fixed threshold, a cell may be shut down, and a served user may be distributed to a new target cell. Efficient energy consumption may also be achieved in another manner, for example, load reduction, coverage modification, or other RAN configuration adjustment. An optimal energy saving decision depends on many factors, including load statuses of different RAN nodes, RAN node capabilities, KPI/QoS requirements, a quantity of activated users and UE mobility, cell utilization, and the like. To avoid great network performance deterioration and/or energy efficiency deterioration caused by incorrect cell shutdown, an ML (machine learning) technology may be used to optimize an energy saving decision by analyzing data collected in the RAN. An ML algorithm may be used to predict energy efficiency and a load status in a next periodicity, to make a better decision on cell activation/deactivation, thereby saving energy. Based on a predicted load, a system, namely, the communication network, may dynamically configure energy saving policies (for example, shutdown timing and granularity, and offloading actions), to balance system performance and energy efficiency and reduce power consumption.

Load balancing: Load balancing is to evenly distribute loads between cells and between cell areas, transfer a part of traffic from a congested cell or a congested cell area, or distribute a user from a cell, a cell area, a carrier, or a RAT, to improve network performance. This may be implemented by optimizing cell reselection/handover parameters (handover thresholds or the like) and handover actions. Optimization automation may provide high-quality user experience, increase a system capacity, and minimize manual intervention on network management and an optimization task. If a load balancing decision depends on a current/past cell load status, a network traffic load and a resource status may change rapidly, especially in high mobility and heavy connection scenarios. This may result in ping-pong handovers between different cells, cell overload, and user service quality deterioration. It is difficult to ensure the overall network and service performance during load balancing. For load balancing, a UE in a congested cell may be distributed to a target cell through a handover procedure or handover configuration adaptation. For example, if a UE with a time-varying traffic load is distributed to the target cell, the target cell may be overloaded due to new heavy traffic. In this case, it is difficult to determine whether service performance after an offloading action reaches an expected objective. To resolve the foregoing problem, a prediction model-based solution may be introduced to improve load balancing performance. Based on collection of various measurements and feedback of users and network nodes, historical data, and the like, the prediction model-based solution and load prediction can improve load balancing performance, to provide higher-quality user experience and increase the system capacity.

Mobility optimization: Mobility management is a solution to ensure service continuity during mobility by minimizing service drops, radio link failures (RLFs), unnecessary handovers, and ping-pong handovers. For a future high-frequency network, as coverage of a single node decreases, a frequency at which a UE switches between nodes becomes high, especially for a high-mobility UE. In addition, for an application that has a strict requirement on QoS such as reliability and a delay, QoE (quality of experience) is sensitive to handover performance. Therefore, mobility management needs to avoid a handover failure and reduce a delay during the handover. In addition, effectiveness of feedback-based adjustment may be weak due to randomness and uncertainty of a transmission environment. In addition to a mobility baseline, mobility optimization area further includes dual connectivity, CHO, and DAPS. These areas have additional aspects to be processed in mobility optimization. Mobility aspects of SON that can be enhanced by using AI/ML include reducing a likelihood of unexpected events related to mobility. For example, such unexpected events may include intra-system too late handover, intra-system too early handover, intra-system handover to a wrong cell, and the like.

Intra-system too late handover: After a UE stays in a cell for long time, a radio link failure (RLF) occurs. The UE attempts to reestablish a radio link connection in another cell.

Intra-system too early handover: An RLF occurs shortly after a UE is successfully handed over from a source cell to a target cell, or a handover fails during the handover. The UE attempts to reestablish a radio link connection in the source cell.

Intra-system handover to a wrong cell: An RLF occurs shortly after a UE is successfully handed over from a source cell to a target cell, or a handover fails during the handover. The UE attempts to reestablish a radio link connection in a cell other than the source cell and the target cell.

Successful handover: Potential problems exist during the successful handover.

RAN AI may observe a plurality of HO (Handover handover) events with related parameters, use this information to train its ML model, and attempt to identify a parameter set that leads to a successful HO and a parameter set that leads to an unexpected event.

UE position/mobility/performance prediction: Predicting a UE position is a key part of mobility optimization because many mobility-related RRM actions (for example, selecting a target cell for handover) can benefit from a predicted UE position/mobility path. UE mobility prediction is also a key factor in optimizing early data forwarding, especially for CHO (conditional handover). When a UE is served by some cells, UE performance prediction is a key factor in determining an optimal mobility target for maximizing efficiency and performance.

Traffic steering (Traffic Steering): A handover trigger point is adjusted to select an optimal combination of Pcell/PSCell/Scell (primary serving cell/primary serving cell in a primary cell group (in dual connectivity)/primary secondary cell/secondary cell) to serve a user, so that efficient resource processing can be implemented. Existing traffic steering may also be improved by providing the RAN node with information related to mobility or dual connectivity.

For example, before a handover is initiated, a source gNB may use UE performance feedback collected for a previous successful handover and receive the UE performance feedback from a neighboring gNB. Similarly, in a case of dual connectivity, before triggering addition of a secondary gNB or triggering an SN change, an eNB may use information (feedback) previously received from the gNB to successfully complete an SN addition or SN change process.

In an example of two reports, a source RAN node of a mobility event or a RAN node serving as a primary node (eNB of EN-DC or gNB of NR-DC) may use feedback received from another RAN node as an input to an AI/ML function supporting a traffic-related decision (for example, the target cell is selected in a case of mobility, and the PSCell/Scell (s) are selected in another case), to optimize a future decision.

It may be understood that the foregoing network management scenarios are all examples. A specific application scenario is not limited in embodiments of this application. Any scenario in which prediction information is obtained by using an artificial intelligence technology to perform network management is applicable to this application.

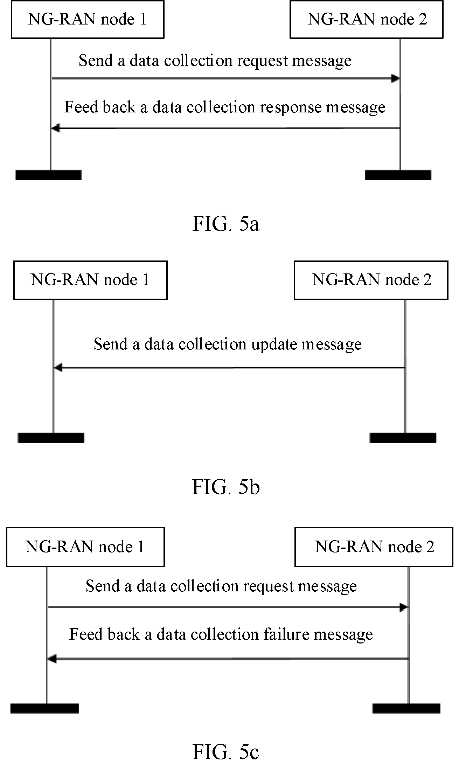

FIG. 5a is an example diagram of a data collection process according to an embodiment of this application. As shown in FIG. 5a, at a 3GPP RAN3 117 meeting, a general new procedure is introduced on an XN interface (an open interface used for interconnection between NG-RAN nodes, where the NG-RAN includes a plurality of gNBs connected to a 5G core network), to transmit data used for artificial intelligence. The new procedure is named a data collection procedure (Data Collection Procedure). The procedure is use-case-independent, data-type-independent, and non-UE-associated. Use-case-independent means that data (for example, AI/ML (machine learning) data) that is transmitted in the procedure and that is used for artificial intelligence may be used for all AI use cases, including but not limited to the three use cases (load balancing, mobility optimization, and energy saving) in the example in S401. Data-type-independent means that the AI/ML data transmitted in the procedure may include input data, output data, feedback data, and the like of an AI model, for example, prediction information and measurement information. Non-UE-associated means that the procedure is not associated with particular UEs, but may also be used to transmit data of the particular UEs, for example, per-UE performance feedback information.

A data reporting manner in the data collection procedure may include: one-off reporting and periodic reporting. The procedure also supports partial reporting. To be specific, when a requested node can provide a part of requested items, the procedure does not fail to be started by default. Still refer to FIG. 5a. An NG-RAN node 1 sends a data collection request message to an NG-RAN node 2 to initiate the procedure, to start AI/ML-related information reporting or stop AI/ML-related information reporting. After receiving the data collection request message, the NG-RAN node 2 may perform different actions based on an IE (information element, information element, IE for short) in the data collection request message. Details are as follows:

If a registration request IE is set to "start", requested data collection reporting needs to be started based on a parameter provided in the request.

If the registration request IE is set to "stop", data collection reporting of all cells needs to be stopped and the reporting needs to be terminated.

If the NG-RAN node 2 can provide all requested information, the NG-RAN node 2 needs to initiate data collection reporting based on a request of the NG-RAN node 1, and respond with a data collection response message, that is, feed back the data collection response message. The response message may include collected data.

If the NG-RAN node 2 can provide a part rather than all of the requested information (that is, the procedure supports partial reporting), the NG-RAN node 2 needs to initiate data collection reporting for accessed request information, and include a node measurement initiation result, a per-cell measurement initiation result, or both the node measurement initiation result and the per-cell measurement initiation result in the data collection response message.

If the data collection request includes a report periodicity IE, the report periodicity IE indicates a periodicity of periodic data collection reporting, that is, periodic reporting. For example, FIG. 5b is an example diagram of a data collection process according to an embodiment of this application. As shown in FIG. 5b, in a periodic reporting scenario, the NG-RAN node 2 may periodically send a data collection update message to the NG-RAN node 1 to feed back data collected in each periodicity. If the data collection request message does not include the report periodicity IE, the NG-RAN node 2 performs reporting only once by default, that is, one-off reporting.

If a request prediction time IE exists in the data collection request message, the request prediction time IE indicates a specific time point at which prediction of the request information is applied. The NG-RAN node 2 needs to take the request prediction time IE into account when generating requested prediction information.

When measurement is started, a reporting feature IE in the data collection request indicates a type of object on which the NG-RAN node 2 needs to perform measurement or prediction. As of the 120^{th} meeting of RAN3, data that has been agreed to be transmitted in the procedure includes: predicted resource status information (a predicted radio resource status, a predicted quantity of activated UEs, and a predicted quantity of RRC connections) and UE performance feedback information (average UE throughput DL, average UE throughput UL, an average data packet delay, and an average data packet loss). The NG-RAN node 2 needs to include the following information in the data collection update message:

If a first bit "predicted radio resource status" of the reporting feature IE included in the AI/ML information request message is set to "1", a predicted radio resource status IE is included.

If a second bit "predicted quantity of activated UEs" of the reporting feature IE included in the AI/ML information request message is set to "1", a predicted quantity of activated UEs IE is included.

If a third bit "predicted RRC (radio resource control) connections" of the reporting feature IE included in the AI/ML information request message is set to "1", a predicted RRC connections IE is included.

If a fourth bit "average UE throughput DL" of the reporting feature IE included in the AI/ML information request message is set to "1", an average UE throughput DL IE is included.

If a fifth bit "average UE throughput UL" of the reporting feature IE included in the AI/ML information request message is set to "1", an average UE throughput UL IE is included.

If a sixth bit "average data packet delay" of the reporting feature IE included in the AI/ML information request message is set to "1", an average data packet delay IE is included.

If a seventh bit "average data packet loss" of the reporting feature IE included in the AI/ML information request message is set to "1", an average data packet loss IE is included.

FIG. 5c is an example diagram of a data collection process according to an embodiment of this application. As shown in FIG. 5c, if none of the requested data collection reporting can be started, the NG-RAN node 2 needs to send a data collection failure message with an appropriate cause value, that is, feed back a data collection failure message.

It may be understood that a manner of transmitting the current measurement information may be the manners in the embodiments in FIG. 5a to FIG. 5c.

S402: The node 1 processes the current measurement information by using each prediction model in the at least one prediction model, to obtain current prediction information corresponding to the prediction model.

When obtaining the current measurement information, the node in the communication network may process the current measurement information by using each prediction model in the at least one prediction model, to obtain the current prediction information corresponding to the prediction model. In an example, the node is the first node. In this case, the first node may perform S402. In an example, the node is the second node, and S402 may specifically include: The second node sends the current measurement information to the first node by using the procedures shown in FIG. 5a and FIG. 5b, and indicates the first node to perform information prediction. Then, the first node processes the current measurement information by using each prediction model in the at least one prediction model, to obtain the current prediction information corresponding to the prediction model.

In specific application, current prediction information of a same scenario may be obtained by using at least one prediction model. These prediction models may be neural network models of different types, and/or models obtained by training neural network models of a same type by using different samples. This is not limited in embodiments of this application. Specific current prediction information of different scenarios may be different. For example, prediction information related to network energy saving, load balancing, and mobility optimization of the scenario shown in S401 may separately include resource status prediction information (for example, a predicted radio resource status, a predicted quantity of activated UEs, and/or a predicted quantity of RRC connections), UE track prediction information (a predicted cell identifier and corresponding camping time), and the like.

S403: The node 1 determines, based on the reference data, a quality indicator of the current prediction information corresponding to each of the at least one prediction model.

In an optional implementation, the reference data includes one of the following: a preset test set, a quality indicator of historical prediction information, the historical prediction information, and prediction assistance information, where the preset test set includes test measurement information, test prediction information corresponding to the test measurement information, and actual information corresponding to the test prediction information; and the prediction assistance information indicates attribute information and/or a running environment of each prediction model.

It may be understood that, for different reference data, the node in the communication network may determine a quality indicator in different manners. For ease of understanding and proper layout, specific descriptions are provided in the embodiments in FIG. 6 to FIG. 9 below.

S404: The node 1 sends, to a node 0, the current prediction information corresponding to each prediction model and the quality indicator of the current prediction information.

When the node in the communication network is the first node, for example, the node 1, S404 may include: The first node sends the quality indicator and the obtained current prediction information to the second node, so that the second node performs a network management operation for the scenario based on current prediction information whose quality indicator satisfies a quality condition.

It may be understood that the node 1 may carry the quality indicator of the current prediction information when sending the current prediction information, or may separately send the current prediction information and the quality indicator of the current prediction information. A specific manner of sending the information is not limited in embodiments of this application.

S405: The node 0 performs the network management operation for the scenario based on the current prediction information whose quality indicator satisfies the quality condition and that is in the current prediction information corresponding to each prediction model.

For example, when the quality indicator includes precision, the second node selects current prediction information whose precision is greater than a precision threshold, to perform the network management operation for the scenario, for example, load balancing. When the node in the communication network is the second node, the second node may perform S404. For example, the prediction information is transmitted between gNBs. After receiving the prediction information, the gNB make a corresponding AI policy based on local information. For example, after receiving load prediction information sent by neighboring cell nodes node 1, node 2, and node 3, the node 0 determines which neighboring cell nodes are idle, and selects, based on local load prediction information, UE performance information, and the like, cells to which UEs are to be handed over, to optimize load balancing. For another example, the node 0 predicts a movement track of the UE, and sends the movement track to the target cell in advance, to perform mobility enhancement optimization.

It may be understood that, when there is one prediction model, there may be one piece of current prediction information. In this case, the node in the communication network may stop performing the network management operation for the scenario when the current prediction information does not satisfy the quality condition. In an example, in this case, the node in the communication network may further feed back response information indicating that the prediction information is unqualified to the first node, to obtain prediction information that satisfies the quality condition, thereby improving network performance and user experience.

The following describes S402 to S405 in detail with reference to FIG. 6 to FIG. 9.

FIG. 6 is a schematic flowchart of a network management method according to an embodiment of this application. As shown in FIG. 6, in this embodiment of this application, precision and/or accuracy of a specific test set (prediction information whose actual value is known, for example, historical prediction information corresponding to actual information) may approximately represent an evaluation result, namely, a quality indicator, of the prediction information. A specific structure and form of a node are not limited in embodiments. For example, the node may be a node that can predict or needs to predict information, for example, a gNB, a UE, a 5GC, or an OAM.

In an optional example, the network management method provided in this embodiment of this application may include the following steps.

S601: A node c sends an evaluation preconfiguration message to a node 1.

The third-party node c, namely, a third node, sends the evaluation preconfiguration message, namely, a preset test set, to all nodes node 1 that can generate prediction information, namely, a first node, to preconfigure, for these nodes that can generate prediction information, data used for evaluation, such as a test set (for example, a test data set and a data set index) and an evaluation indicator. If S601 exists, S602 is optional. If both S601 and S602 exist, an evaluation preconfiguration message sent by a node 0, namely, a second node, in S602 does not need to carry a specific test data set, but only needs to carry a test set index to indicate the test data set stored in the node 1. In this case, it is equivalent to that the second node sends evaluation requirement information (including the test set index) to the first node, so that the first node determines, as the preset test set, namely, the test data set indicated by the test set index, a test set that satisfies the evaluation requirement information in an original test set stored in the first node. The third-party node c may be another node in a communication network, for example, a 5GC, an OAM, or an NG-RAN. This is not limited in embodiments of this application.

The evaluation preconfiguration message may specifically include the following information: a test set and identification information, where the identification information includes an AI model/task/function identifier. The AI model/task/function identifier indicates a specific AI model/task/function. The test set includes a dataset index and a test dataset, and the test dataset includes specific test data, for example, an input and an output of an AI model, namely, test measurement information, test prediction information corresponding to the test measurement information, and actual information corresponding to the test prediction information. In an optional example, the evaluation preconfiguration message may further include an evaluation indication and/or an evaluation indicator. The evaluation indication indicates whether a prediction evaluation result needs to be calculated, and an implementation form may be 1-bit indication information. If no evaluation indication is carried, calculation is required by default, that is, quality evaluation needs to be performed. The evaluation indicator indicates how the node 1 calculates a prediction evaluation based on the test set, that is, a manner of calculating the quality indicator.

For example, the evaluation indicator may be one or more of the following indicators: a mean squared error (MSE, Mean Squared Error), a root mean square error (RMSE, Root Mean Square Error), a mean absolute error (MAE, Mean Absolute Error), a mean absolute percentage error (MAPE, Mean Absolute Percentage Error), accuracy (Accuracy), precision (Precision), recall (Recall), and a comprehensive evaluation indicator (F1). MSE is a ratio of a square of a deviation between a predicted value and an actual value to a quantity of observation times. A larger error indicates a larger value. RMSE is a square root of the MSE. MAE is an average value of absolute values of the deviation between the predicted value and the actual value. MAPE is an average percentage of the deviation between the predicted value and the actual value divided by an absolute value of the actual value, and is a statistical indicator commonly used to measure prediction accuracy, such as time series prediction. The accuracy is a quantity of correctly classified samples divided by a total quantity of samples. Precision is a quantity of samples predicted to be positive and correct divided by a quantity of samples predicted to be positive. Recall is a quantity of samples predicted to be positive and correct divided by a quantity of samples labeled as positive. The comprehensive evaluation indicator is a weighted harmonic average of Precision and Recall, that is, F1=2(Precision+Recall)/(Precision*Recall).

An association relationship between the foregoing information is not limited in embodiments of this application. A node may calculate the prediction evaluation result based on the evaluation preconfiguration message indicating a specific evaluation indicator performed by a specific AI model/task/function or specific AI models/tasks/functions of the node 1 based on a specific data set. The AI model/task/function is a prediction model, a prediction task, or a prediction function that is based on an artificial intelligence technology. For example, a possible implementation of the evaluation preconfiguration message is as follows: a dataset 1, an AI model ID List 1, and evaluation indicators MSE and MAE. The evaluation preconfiguration message indicates that the dataset 1 is applicable to an AI model whose AI model identifier is an ID List 1, and the evaluation indicator may be one or more of the MSE and the MAE. The dataset 1 may be a test set, that is, includes a dataset index and a test dataset, or the dataset 1 in S602 may be only a dataset index. Similarly, another evaluation preconfiguration message may be a dataset 2, an AI model ID 2, and the evaluation indicators MSE and MAE. The another evaluation preconfiguration message indicates that the dataset 2 is applicable to an AI model whose AI model identifier is an ID 2, and the evaluation indicator may be one or more of the MSE and the MAE.

It may be understood that different prediction models/tasks/functions may use different or same datasets, namely, test sets, and evaluation indicators in different evaluation preconfiguration messages may be the same or different. The evaluation preconfiguration message is merely an example. Specific content and a specific structure of the evaluation preconfiguration message are not limited in embodiments of this application, and may be set based on a specific application scenario.

S602: The node 0 sends an evaluation preconfiguration message to the node 1.

The node 0 receiving prediction information sends prediction information evaluation assistance information to the node 1 generating the prediction information. The prediction information evaluation assistance information is the evaluation preconfiguration message in S602.

If S601 does not exist, that is, no test set is preconfigured, the prediction information evaluation assistance information may include the following information: a test set and identification information, where the identification information includes an AI model/task/function identifier. The AI model/task/function identifier indicates a specific AI model/task/function. The test set includes a dataset index and a test dataset, and the test dataset includes an input and an output of an AI model, namely, test measurement information, test prediction information corresponding to the test measurement information, and actual information corresponding to the test prediction information. In an optional example, the evaluation preconfiguration message may further include an evaluation indication and/or an evaluation indicator. The evaluation indication indicates whether a prediction evaluation result needs to be calculated, and an implementation form may be 1-bit indication information. If no evaluation indication is carried, calculation is required by default, that is, quality evaluation needs to be performed. The evaluation indicator indicates how the node 1 calculates a prediction evaluation based on the test set, that is, a manner of calculating the quality indicator. For specific descriptions of the evaluation indicator, refer to S601. An association relationship between the foregoing information is not limited in embodiments of this application.

If S601 exists, that is, the test set is preconfigured, the complete test data set does not need to be transmitted. The prediction information evaluation assistance information may not need to carry a specific test data set, and only needs to carry the test set index to indicate the test data set stored in the node 1. For information other than the test set index in the prediction information evaluation assistance information, refer to the descriptions in S601 or the descriptions of the prediction information evaluation assistance information when S601 does not exist. Details are not described herein again. An association relationship between the foregoing information is not limited in embodiments of this application.

In an optional implementation, a process of sending the prediction information evaluation assistance information may include either of (1) and (2):
(1) The prediction information evaluation assistance information is carried in a data collection request message (for details, refer to the descriptions in the embodiments in FIG. 5a to FIG. 5c), that is, the test set and the evaluation indicator are specified when the prediction information is requested. Different test sets and same/different evaluation indicators may be specified when different prediction information is requested, or a same test set and evaluation indicator may be specified when all prediction information is requested.
(2) The prediction information evaluation assistance information is transmitted by using a new procedure. In other words, a procedure different from the procedure of the data collection request message is added to transmit the prediction information evaluation assistance information.

S603: The node 1 sends the prediction information and an evaluation result to the node 0.

In an example, the node 1 may carry the evaluation result when sending the prediction information to the node 0.

The node 1 locally calculates, based on the evaluation preconfiguration message, the prediction information that needs to be sent in S603, that is, an evaluation result of current prediction information, and sends the prediction information to the node 0. Optionally, at least one of the following data: the AI model/task/function identifier, the dataset index, and an evaluation indicator identifier, may be further sent in S603.

In this embodiment of this application, the node generating the prediction information calculates the evaluation result of the prediction information by obtaining the specific test set, and the node requesting the prediction information may obtain the corresponding evaluation indicator while obtaining the prediction information, to evaluate reliability/precision/accuracy of the prediction information, thereby helping improve precision of an AI decision related to the prediction information, and further improving AI service precision.

FIG. 7 is a schematic flowchart of a network management method according to an embodiment of this application. As shown in FIG. 7, in this embodiment of this application, precision and/or accuracy of historical prediction information may approximately represent an evaluation result of prediction information. A node is not limited in embodiments, and may be a node that can predict or needs to predict information, for example, a gNB, a UE, a 5GC, or an OAM. In this embodiment, a node i generally refers to a node that may have actual information/an evaluation result of the historical prediction information.

In an optional example, if the actual information/evaluation result of the historical prediction information is from the node i, namely, a fourth node, for example, a node 1 previously or historically sends UE track prediction to the node i, after the UE is handed over to the node i, the node i obtains an actual track of the UE, or calculates an evaluation result of the UE track prediction. In this case, the following S702 to S704 need to be performed.

In an optional example, if the actual information/evaluation result of the historical prediction information is from the node 1, namely, the fourth node, for example, the node 1 has previously predicted a local load, when an actual moment corresponding to predicted historical prediction information arrives, the node 1 obtains a local historical actual load or calculates an evaluation result of load prediction, that is, the node i is the node 1. In this case, the following S703 and S704 do not need to be performed.

Details are as follows:
In an optional example, the method may include the following steps.

S701: A node 0 sends a prediction evaluation indication message to the node 1, to indicate, when a prediction information request is sent, whether a prediction evaluation result is required. The prediction evaluation indication message may be 1-bit indication information, or may be a specific evaluation result indicator. Optionally, the node 0 may further indicate the lowest precision of the prediction information. If the lowest precision of the prediction information does not satisfy a requirement, the node 1 does not need to send the prediction information, but indicates, to the node 0, that the prediction information request fails and a reason (for example, precision of the prediction information does not satisfy the requested lowest precision). It may be understood that, in an example, S701 may not be performed.

A manner of sending the prediction evaluation indication message is similar to the manner of sending the prediction information evaluation assistance information in the embodiment in FIG. 6. A difference lies in that specific sent information is different. For a same part, refer to the manner of sending the prediction information evaluation assistance information in the embodiment in FIG. 6. Details are not described herein again.

In an optional example, the method may include S702: The node 1 sends the prediction information and a prediction information reservation indication to the node i. For example, the prediction information reservation indication may include a time period for reserving the prediction information, or a time period for reserving the prediction evaluation result, and an evaluation indicator indication (indicating an evaluation indicator to be selected). Different reservation time periods/evaluation indicators may be specified when different prediction information is requested, or a same reservation time period/evaluation indicator may be specified when all prediction information is requested. Indication information that is in any format and/or of any content and that indicates to reserve the sent prediction information may be used in this application. This is not limited in embodiments of this application.

S703: The node 1 sends a historical prediction evaluation request to the node i. The historical prediction evaluation request is equivalent to a historical prediction evaluation request message, and is used by the node 1 to request an evaluation result of prediction information previously sent by the node i. The historical prediction evaluation request message may include at least one of the following: an AI model/task/function identifier, a UE identifier list, a cell identifier list, and a node identifier list. Details are as follows:

The AI model/task/function identifier separately indicates a specific AI model/task/function.

The UE identifier list indicates UEs whose historical prediction evaluation results are requested.

The cell identifier list indicates cells whose historical prediction evaluation results are requested.

The node identifier list indicates nodes whose historical prediction evaluation results are requested.

A time index may be a time point or a time period, and indicates time when the historical prediction evaluation result is requested.

A historical prediction information identifier list, for example, resource status prediction, UE track prediction, and UE performance prediction, indicates a prediction item whose historical prediction evaluation result is requested.

The evaluation indicator, indicating a calculation manner of requesting the historical prediction evaluation result, may be one or more of the following indicators: a mean squared error (mean squared error, MSE), a root mean square error (root mean square error, RMSE), a mean absolute error (mean absolute error, MAE), a mean absolute percentage error (mean absolute percentage error, MAPE), accuracy (accuracy), precision (Precision), recall (Recall), and a comprehensive evaluation indicator (F1).

A node 0 identifier indicates that the historical prediction evaluation result requested by the node i is sent to the node 0. Correspondingly, a corresponding reason may be further carried. For example, the requested historical prediction evaluation result is used as an evaluation result of latest prediction information.

An association relationship between the foregoing information is not limited in embodiments of this application.

S704: The node i feeds back the historical prediction evaluation result to the node 1.

In an example, the node i may directly send the historical prediction evaluation result to the node 0. The historical prediction evaluation result is a quality indicator of the historical prediction information, and may be an actual value of the historical prediction information, or may be an evaluation result that is of the historical prediction information and that is obtained through calculation. A calculation manner of the evaluation result of the historical prediction information is similar to the calculation manner of the evaluation result of the current prediction information in the embodiment in FIG. 6, and a difference lies in that prediction information is different. For a same part, refer to the descriptions in the embodiment in FIG. 6. Details are not described herein again. In an optional example, the historical prediction evaluation result may specifically further include at least one of the following: an AI model identifier, a prediction task identifier, a function identifier, the UE identifier, the time index, and the historical prediction information identifier.

An association relationship between the foregoing information is not limited in embodiments of this application.

S705: The node 1 sends the prediction information, an evaluation result, and the prediction information reservation indication to the node 0.

In an example, when sending the prediction information to the node 0, the node 1 carries the evaluation result of the historical prediction information as an evaluation result of current prediction information. Optionally, when sending the prediction information to the node 0, the node 1 may further carry at least one of the following: the AI model/task/function identifier, historical prediction-related information (the UE identifier, the time index, and a node i identifier), an evaluation indicator identifier, and the prediction information reservation indication. In other words, in an example, the node 1 may not send the prediction information reservation indication.

It may be understood that S702 may be performed before or after S701.

In this embodiment of this application, precision of the historical prediction information obtained by a node generating the prediction information approximately represents the evaluation result of the prediction information, and a node requesting the prediction information may obtain the corresponding evaluation indicator while obtaining the prediction information, to evaluate reliability/precision/accuracy of the prediction information, thereby helping improve precision of an AI decision related to the prediction information, and further improving AI service precision.

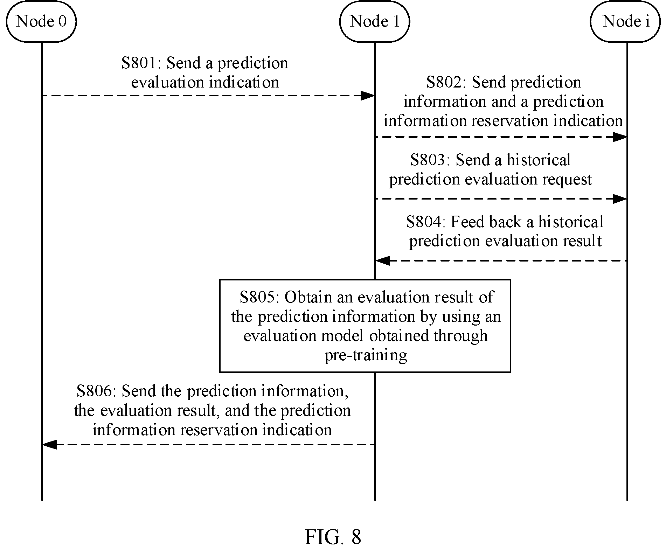

FIG. 8 is a schematic flowchart of a network management method according to an embodiment of this application. As shown in FIG. 8, in this embodiment of this application, an evaluation result of prediction information is obtained through inference by using an AI evaluation model. A node is not limited in embodiments, and may be a node that can predict or needs to predict information, for example, a gNB, a UE, a 5GC, or an OAM. In this embodiment, a node i generally refers to a node that may have actual information/an evaluation result of the historical prediction information.

S801: A node 0 sends a prediction evaluation indication to a node 1.

S802: The node 1 sends prediction information and a prediction information reservation indication to the node i.

S801 and S802 are the same as S701 and S702, and details are not described herein again. For details, refer to the descriptions of the embodiment in FIG. 7.

S803: The node 1 sends a historical prediction evaluation request to the node i.

S803 is similar to S703. A difference lies in that in S803, historical prediction information is collected to obtain an AI evaluation model through training, and does not need to be sent to the node 0, and therefore may not carry a node 0 identifier.

S804: The node i feeds back a historical prediction evaluation result to the node 1.

S804 is the same as S704, and details are not described herein again. For details, refer to the descriptions of the embodiment in FIG. 7.

It may be understood that S802 to S804 may be performed before or after S801.

S805: The node 1 obtains an evaluation result of the prediction information by using an evaluation model obtained through pre-training.

The node 1 collects evaluation results of historical prediction information of an adjacent node and local historical prediction information as AI training data, to obtain a local AI evaluation model, namely, an evaluation model, through training, to obtain the evaluation result of the prediction information. In a possible implementation, after inferring the prediction information by using a local AI model, the node 1 may process the prediction information by using the local AI evaluation model, to obtain the evaluation result of the prediction information through inference. A possible implementation of obtaining the evaluation result of the prediction information through inference by using the AI evaluation model is as follows:
Input of the AI evaluation model: output data, namely, the prediction information. Optionally, input data, namely, current measurement information, may be further included.

Output of the AI evaluation model: the evaluation result.

In other words, in an example, the node 1 may input current prediction information and the current measurement information into the AI evaluation model to obtain the evaluation result. It may be understood that in this case, the training data used to obtain the AI evaluation model through training further includes historical measurement information.

S806: The node 1 sends the prediction information, the evaluation result, and the prediction information reservation indication to the node 0.

When sending the prediction information to the node 0, the node 1 carries the evaluation result of the historical prediction information as an evaluation result of the current prediction information. Optionally, when sending the prediction information to the node 0, the node 1 may further carry at least one of the following: an AI model/task/function identifier, an AI evaluation model identifier, an evaluation indicator identifier, and the prediction information reservation indication. In other words, in an example, the node 1 may not send the prediction information reservation indication.

In this embodiment of this application, a node generating the prediction information obtains the evaluation result of the prediction information through inference, and a node requesting the prediction information may obtain the corresponding evaluation indicator while obtaining the prediction information, to evaluate reliability/precision/accuracy of the prediction information, thereby helping improve precision of an AI decision related to the prediction information, and further improving AI service precision.

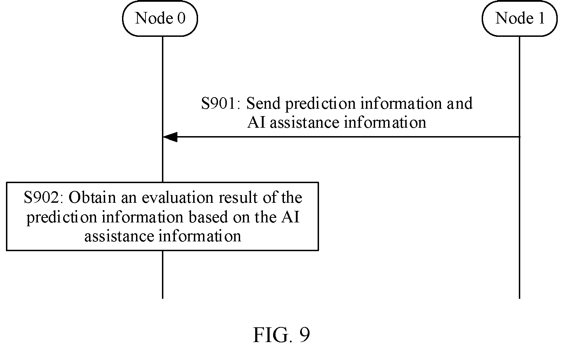

FIG. 9 is a schematic flowchart of a network management method according to an embodiment of this application. As shown in FIG. 9, in this embodiment of this application, AI assistance information, namely, prediction assistance information, may be used to implicitly indicate an evaluation result of prediction information. For example, it is considered by default that prediction information from an AI service similar to an AI service in a scenario has higher precision. A node is not limited in embodiments, and may be a node that can predict or needs to predict information, for example, a gNB, a UE, a 5GC, or an OAM. In this embodiment, a node i generally refers to a node that may have actual information/an evaluation result of the historical prediction information.

A main procedure is as follows:
S901: A node 1 sends the prediction information and the AI assistance information to a node 0.

When sending the prediction information to the node 0 receiving the prediction information, the node 1 generating the prediction information carries the AI assistance information, where the AI assistance information implicitly indicates the evaluation result of the prediction information.

The AI assistance information may be one or more of the following: an AI service identifier/usable scenario (belonging to a running environment/model attribute), an AI model identifier (belonging to the model attribute), an AI function identifier (belonging to the model attribute), a local data feature (a data non-IID degree, related to a generalization capability of an AI model) (belonging to the running environment), an identifier of an equipment vendor to which the model can be applied (belonging to the running environment), a model input and output parameter (belonging to the model attribute), a training parameter (belonging to the model attribute), and another model parameter.

S902: The node 0 obtains the evaluation result of the prediction information based on the AI assistance information.

After receiving the AI assistance information, the node 0 analyzes the evaluation result of the prediction information based on a prediction requirement of a network management scenario. In S902, the node 0 determines, based on a degree of matching between prediction assistance information corresponding to a prediction model and the prediction requirement, current prediction information whose quality indicator satisfies a quality condition and that is in current prediction information corresponding to each prediction model.

For example, AI assistance information 1 from the node 1 includes a mobility optimization AI service, and AI assistance information 2 from a node 2 includes a load balancing AI service. The prediction information is from a node 11/node 12, and includes QoE prediction of a UE. The node 0 performs a mobility optimization service of the UE. In other words, a prediction requirement of a second node is the mobility optimization service of the UE, and the second node expects to determine a handover policy of the UE based on the evaluation result of the prediction information. The node 0 determines, based on the AI assistance information 1 and the AI assistance information 12, that the AI assistance information 1 better matches the prediction requirement of the node 0, and therefore determines that the prediction information of the node 1 has higher precision. Therefore, the UE is handed over to the node 1.

It may be understood that both the node 1 and the node 2 are first nodes. In an example, the two types of AI assistance information may alternatively be from a same first node. A quantity of first nodes and whether the AI assistance information is from a same node are not limited in embodiments of this application, and depend on a specific application requirement.

In this embodiment of this application, a node requesting the prediction information may obtain the corresponding AI assistance information while obtaining the prediction information, to approximate the evaluation result, so as to evaluate reliability/precision/accuracy of the prediction information, thereby helping improve precision of an AI decision related to the prediction information, and further improving AI service precision.

It may be understood that, when quality evaluation does not need to be performed on the prediction information based on current prediction information, S402 and S403 may be performed in any sequence, that is, S402 and S403 may be performed in sequence or simultaneously. This is not limited in embodiments of this application.

In this embodiment of this application, a node in a communication network may obtain reference data that matches a network management scenario, where the reference data indicates prediction quality of at least one prediction model that matches the scenario. Further, the node in the communication network may determine, based on the reference data, a quality indicator of current prediction information corresponding to each of the at least one prediction model, that is, evaluate quality (for example, accuracy and/or precision) of prediction information currently obtained by each prediction model. Based on this, the node in the communication network performs a network management operation based on current prediction information whose quality indicator satisfies a quality condition, to avoid performing a network operation based on inaccurate prediction information, thereby improving network performance and user experience.

In addition, the network management apparatus and the communication network shown in FIG. 3a to FIG. 3c in this application are configured to implement functions of the network management method in the foregoing embodiments of this application, and include corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

An embodiment further provides a computer storage medium. The computer storage medium stores computer instructions. When the computer instructions are run on an electronic device, the electronic device is enabled to perform the foregoing related method steps to implement the network management method in the foregoing embodiments.

An embodiment further provides a computer program product. When the computer program product runs on a computer, the computer is enabled to perform the foregoing related steps to implement the network management method in the foregoing embodiments.

The electronic device, the computer storage medium, the computer program product, or the chip provided in embodiments is configured to perform the corresponding method provided above. Therefore, for beneficial effects that can be achieved, refer to the beneficial effects in the corresponding method provided above. Details are not described herein again.

Any content of embodiments of this application and any content of a same embodiment may be freely combined. Any combination of the foregoing content shall fall within the scope of this application.

A person skilled in the art should be aware that in the foregoing one or more examples, functions described in embodiments of this application may be implemented by hardware, software, firmware, or any combination thereof. When the functions are implemented by software, the functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

## Claims

1. A network management method, applied to a first node performing information prediction in a communication network, wherein the method comprises:
obtaining reference data and current measurement information that match a network management scenario, wherein the reference data indicates prediction quality of at least one prediction model that matches the scenario;
processing the current measurement information by using each prediction model in the at least one prediction model, to obtain current prediction information corresponding to the prediction model;
determining, based on the reference data, a quality indicator of the current prediction information corresponding to each of the at least one prediction model; and
sending the current prediction information corresponding to each prediction model and the quality indicator of the current prediction information to a second node in the communication network, wherein the second node is configured to perform a network management operation for the scenario based on current prediction information whose quality indicator satisfies a quality condition and that is in the current prediction information corresponding to each prediction model.

2. The method according to claim 1, wherein the reference data comprises one of the following: a preset test set, a quality indicator of historical prediction information, the historical prediction information, and prediction assistance information, wherein the preset test set comprises test measurement information, test prediction information corresponding to the test measurement information, and actual information corresponding to the test prediction information; and the prediction assistance information indicates attribute information and/or a running environment of each prediction model.

3. The method according to claim 2, wherein the reference information comprises the preset test set; and
determining, based on the reference data, the quality indicator of the current prediction information corresponding to each of the at least one prediction model comprises:
processing the test measurement information by using each prediction model, to obtain test prediction information corresponding to the prediction model; and
performing, for each prediction model based on the test prediction information corresponding to the prediction model, the test prediction information corresponding to the test measurement information, and the actual information corresponding to the test prediction information, quality evaluation on the test prediction information corresponding to the prediction model, to obtain the quality indicator of the current prediction information corresponding to the prediction model.

4. The method according to claim 2 or 3, wherein the reference information comprises the preset test set; and
obtaining the reference data that matches the network management scenario comprises one of the following steps:
reading the preset test set stored in the first node;
receiving the preset test set sent by a third node, wherein the third node is a node that is different from the first node and the second node and that is in the communication network; and
receiving the preset test set sent by the second node.

5. The method according to claim 2 or 3, wherein the reference information comprises the preset test set; and
obtaining the reference data that matches the network management scenario comprises:
receiving an original test set sent by a third node, wherein the third node is a node that is different from the first node and the second node and that is in the communication network, the original test set comprises a plurality of test sets, and each test set comprises test measurement information, test prediction information corresponding to the test measurement information, and actual information corresponding to the test prediction information;
receiving evaluation requirement information sent by the second node; and
determining, as the preset test set, a test set that satisfies the evaluation requirement information and that is in the original test set.

6. The method according to claim 2, wherein the reference information comprises the quality indicator of the historical prediction information; and
determining, based on the reference data, the quality indicator of the current prediction information corresponding to each of the at least one prediction model comprises:
determining, for each prediction model as the quality indicator of the current prediction information corresponding to the prediction model, a quality indicator that is in the quality indicator of the historical prediction information and that corresponds to the prediction model.

7. The method according to claim 2 or 6, wherein the reference information comprises the quality indicator of the historical prediction information; and
obtaining the reference data that matches the network management scenario comprises:
obtaining the quality indicator of the historical prediction information in a fourth node, wherein the fourth node is a node that is in the communication network and to which the first node has historically sent prediction information for the scenario;
or
when the first node has historically performed information prediction for the scenario, reading the quality indicator of the historical prediction information stored in the first node.

8. The method according to claim 2, wherein the reference information comprises the historical prediction information; and
determining, based on the reference data, the quality indicator of the current prediction information corresponding to each of the at least one prediction model comprises:
inputting, for each prediction model, the historical prediction information corresponding to the prediction model or the current prediction information corresponding to the prediction model into an evaluation model obtained through pre-training, to obtain the quality indicator of the current prediction information corresponding to the prediction model, wherein the evaluation model is a model obtained through training by using the historical network information and a quality indicator of the historical network information.

9. The method according to claim 2 or 8, wherein the reference information comprises the historical prediction information; and
obtaining the reference data that matches the network management scenario comprises:
obtaining an adjacent node of the first node, historical prediction information that matches the network management scenario and that is in the first node, and the quality indicator of the historical prediction information.

10. The method according to any one of claims 6 to 9, wherein after determining, based on the reference data, the quality indicator of the current prediction information corresponding to each of the at least one prediction model, the method further comprises:
when sending the current prediction information corresponding to each prediction model to the second node in the communication network, sending a reservation indication of the current prediction information corresponding to each prediction model to the second node.

11. The method according to any one of claims 6 to 10, wherein obtaining the reference data that matches the network management scenario comprises:
receiving a prediction evaluation indication sent by the second node, wherein the prediction evaluation indication indicates information about a requirement of the second node for a quality indicator of prediction information; and
obtaining, based on the prediction evaluation indication, the reference data that matches the network management scenario.

12. The method according to claim 2, wherein the reference data comprises the prediction assistance information;
obtaining the reference data that matches the network management scenario comprises:
obtaining the prediction assistance information based on the at least one prediction model; and
determining, based on the reference data, the quality indicator of the current prediction information corresponding to each of the at least one prediction model comprises:
determining, for each prediction model as the quality indicator of the current prediction information corresponding to the prediction model, the attribute information and/or the running environment that are/is of the prediction model and that are/is indicated by the prediction assistance information.

13. A network management method, applied to a second node using prediction information in a communication network, wherein the method comprises:
receiving current prediction information that is sent by a first node performing information prediction in the communication network and that corresponds to each prediction model in at least one prediction model, and a quality indicator of the current prediction information; and
performing a network management operation for the scenario based on current prediction information whose quality indicator satisfies a quality condition and that is in the current prediction information corresponding to each prediction model, wherein
the quality indicator of the current prediction information corresponding to each prediction model is determined by the first node based on reference data that matches the network management scenario, the reference data indicates prediction quality of at least one prediction model that matches the scenario, and the prediction model is used to perform information prediction.

14. The method according to claim 13, wherein the reference data comprises one of the following: a preset test set, a quality indicator of historical prediction information, the historical prediction information, and prediction assistance information, wherein the preset test set comprises test measurement information, test prediction information corresponding to the test measurement information, and actual information corresponding to the test prediction information; and the prediction assistance information indicates attribute information and/or a running environment of each prediction model.

15. The method according to claim 14, wherein the reference data comprises the preset test set; and
before receiving the current prediction information that is sent by the first node performing information prediction in the communication network and that corresponds to each prediction model in the at least one prediction model, and the quality indicator of the current prediction information, the method further comprises:
sending the preset test set to the first node;
or
sending evaluation requirement information to the first node.

16. The method according to claim 14, wherein the reference information comprises the quality indicator of the historical prediction information or the historical prediction information; and
the method further comprises:
when receiving the current prediction information that is sent by the first node performing information prediction in the communication network and that corresponds to each prediction model in the at least one prediction model, further receiving a reservation indication that is sent by the first node and that is for the current prediction information corresponding to each prediction model.

17. The method according to claim 14 or 16, wherein the reference information comprises the quality indicator of the historical prediction information or the historical prediction information; and
before receiving the current prediction information that is sent by the first node performing information prediction in the communication network and that corresponds to each prediction model in the at least one prediction model, and the quality indicator of the current prediction information, the method further comprises:
sending a prediction evaluation indication to the first node, wherein the prediction evaluation indication indicates information about a requirement of the second node for a quality indicator of prediction information.

18. The method according to claim 14, wherein the reference data comprises the prediction assistance information; and
performing the network management operation for the scenario based on the current prediction information whose quality indicator satisfies the quality condition and that is in the current prediction information corresponding to each prediction model comprises:
determining a prediction requirement for the scenario;
determining, for each prediction model based on a degree of matching between prediction assistance information corresponding to the prediction model and the prediction requirement, the current prediction information whose quality indicator satisfies the quality condition and that is in the current prediction information corresponding to each prediction model; and
performing the network management operation for the scenario based on the current prediction information whose quality indicator satisfies the quality condition.

19. A network management method, applied to a communication network, wherein the communication network comprises a first node performing information prediction and a second node using prediction information, and the method comprises:
the first node is configured to: obtain reference data and current measurement information that match a network management scenario, wherein the reference data indicates prediction quality of at least one prediction model that matches the scenario; process the current measurement information by using each prediction model in the at least one prediction model, to obtain current prediction information corresponding to the prediction model; determine, based on the reference data, a quality indicator of the current prediction information corresponding to each of the at least one prediction model; and send the current prediction information corresponding to each prediction model and the quality indicator of the current prediction information to the second node in the communication network; and
the second node is configured to perform a network management operation for the scenario based on current prediction information whose quality indicator satisfies a quality condition and that is in the current prediction information corresponding to each prediction model.

20. The method according to claim 19, wherein the reference data comprises one of the following: a preset test set, a quality indicator of historical prediction information, the historical prediction information, and prediction assistance information, wherein the preset test set comprises test measurement information, test prediction information corresponding to the test measurement information, and actual information corresponding to the test prediction information; and the prediction assistance information indicates attribute information and/or a running environment of each prediction model.

21. A network management apparatus, used in a first node performing information prediction in a communication network, wherein the apparatus comprises:
an information obtaining module, configured to: obtain reference data and current measurement information that match a network management scenario, wherein the reference data indicates prediction quality of at least one prediction model that matches the scenario; and process the current measurement information by using each prediction model in the at least one prediction model, to obtain current prediction information corresponding to the prediction model;
a quality evaluation module, configured to determine, based on the reference data, a quality indicator of the current prediction information corresponding to each of the at least one prediction model; and
an information sending module, configured to send the current prediction information corresponding to each prediction model and the quality indicator of the current prediction information to a second node in the communication network, wherein the second node is configured to perform a network management operation for the scenario based on current prediction information whose quality indicator satisfies a quality condition and that is in the current prediction information corresponding to each prediction model.

22. The apparatus according to claim 21, wherein the reference data comprises one of the following: a preset test set, a quality indicator of historical prediction information, the historical prediction information, and prediction assistance information, wherein the preset test set comprises test measurement information, test prediction information corresponding to the test measurement information, and actual information corresponding to the test prediction information; and the prediction assistance information indicates attribute information and/or a running environment of each prediction model.

23. The apparatus according to claim 22, wherein the reference information comprises the preset test set; and
the quality evaluation module is specifically configured to:
process the test measurement information by using each prediction model, to obtain test prediction information corresponding to the prediction model; and
perform, for each prediction model based on the test prediction information corresponding to the prediction model, the test prediction information corresponding to the test measurement information, and the actual information corresponding to the test prediction information, quality evaluation on the test prediction information corresponding to the prediction model, to obtain the quality indicator of the current prediction information corresponding to the prediction model.

24. The apparatus according to claim 22 or 23, wherein the reference information comprises the preset test set; and
the information obtaining module is specifically configured to perform one of the following steps:
reading the preset test set stored in the first node;
receiving the preset test set sent by a third node, wherein the third node is a node that is different from the first node and the second node and that is in the communication network; and
receiving the preset test set sent by the second node.

25. The apparatus according to claim 22 or 23, wherein the reference information comprises the preset test set; and
the information obtaining module is specifically configured to:
receive an original test set sent by a third node, wherein the third node is a node that is different from the first node and the second node and that is in the communication network, the original test set comprises a plurality of test sets, and each test set comprises test measurement information, test prediction information corresponding to the test measurement information, and actual information corresponding to the test prediction information;
receive evaluation requirement information sent by the second node; and
determine, as the preset test set, a test set that satisfies the evaluation requirement information and that is in the original test set.

26. The apparatus according to claim 22, wherein the reference information comprises the quality indicator of the historical prediction information; and
the quality evaluation module is specifically configured to:
determine, for each prediction model as the quality indicator of the current prediction information corresponding to the prediction model, a quality indicator that is in the quality indicator of the historical prediction information and that corresponds to the prediction model.

27. The apparatus according to claim 22 or 26, wherein the reference information comprises the quality indicator of the historical prediction information; and
the information obtaining module is specifically configured to:
obtain the quality indicator of the historical prediction information in a fourth node, wherein the fourth node is a node that is in the communication network and to which the first node has historically sent prediction information for the scenario;
or
when the first node has historically performed information prediction for the scenario, read the quality indicator of the historical prediction information stored in the first node.

28. The apparatus according to claim 22, wherein the reference information comprises the historical prediction information; and
the quality evaluation module is specifically configured to:
input, for each prediction model, the historical prediction information corresponding to the prediction model or the current prediction information corresponding to the prediction model into an evaluation model obtained through pre-training, to obtain the quality indicator of the current prediction information corresponding to the prediction model, wherein the evaluation model is a model obtained through training by using the historical network information and a quality indicator of the historical network information.

29. The apparatus according to claim 22 or 28, wherein the reference information comprises the historical prediction information; and
the information obtaining module is specifically configured to:
obtain an adjacent node of the first node, historical prediction information that matches the network management scenario and that is in the first node, and the quality indicator of the historical prediction information.

30. The apparatus according to any one of claims 26 to 29, wherein the information sending module is further configured to:
when sending the current prediction information corresponding to each prediction model to the second node in the communication network, send a reservation indication of the current prediction information corresponding to each prediction model to the second node.

31. The apparatus according to any one of claims 26 to 30, wherein the information obtaining module is specifically configured to:
receive a prediction evaluation indication sent by the second node, wherein the prediction evaluation indication indicates information about a requirement of the second node for a quality indicator of prediction information; and
obtain, based on the prediction evaluation indication, the reference data that matches the network management scenario.

32. The apparatus according to claim 22, wherein the reference data comprises the prediction assistance information;
obtaining the reference data that matches the network management scenario comprises:
obtaining the prediction assistance information based on the at least one prediction model; and
the quality evaluation module is specifically configured to:
determine, for each prediction model as the quality indicator of the current prediction information corresponding to the prediction model, the attribute information and/or the running environment that are/is of the prediction model and that are/is indicated by the prediction assistance information.

33. A network management apparatus, used in a second node using prediction information in a communication network, wherein the apparatus comprises:
an information receiving module, configured to receive current prediction information that is sent by a first node performing information prediction in the communication network and that corresponds to each prediction model in at least one prediction model, and a quality indicator of the current prediction information; and
an information application module, configured to perform a network management operation for the scenario based on current prediction information whose quality indicator satisfies a quality condition and that is in the current prediction information corresponding to each prediction model, wherein
the quality indicator of the current prediction information corresponding to each prediction model is determined by the first node based on reference data that matches the network management scenario, the reference data indicates prediction quality of at least one prediction model that matches the scenario, and the prediction model is used to perform information prediction.

34. The apparatus according to claim 33, wherein the reference data comprises one of the following: a preset test set, a quality indicator of historical prediction information, the historical prediction information, and prediction assistance information, wherein the preset test set comprises test measurement information, test prediction information corresponding to the test measurement information, and actual information corresponding to the test prediction information; and the prediction assistance information indicates attribute information and/or a running environment of each prediction model.

35. The apparatus according to claim 34, wherein the reference data comprises the preset test set; and
the apparatus further comprises: an information sending module, configured to:
before the information receiving module receives the current prediction information that is sent by the first node performing information prediction in the communication network and that corresponds to each prediction model in the at least one prediction model, and the quality indicator of the current prediction information,
send the preset test set to the first node;
or
send evaluation requirement information to the first node.

36. The apparatus according to claim 34, wherein the reference information comprises the quality indicator of the historical prediction information or the historical prediction information; and
the information receiving module is further configured to:
when receiving the current prediction information that is sent by the first node performing information prediction in the communication network and that corresponds to each prediction model in the at least one prediction model, further receive a reservation indication that is sent by the first node and that is for the current prediction information corresponding to each prediction model.

37. The apparatus according to claim 34 or 36, wherein the reference information comprises the quality indicator of the historical prediction information or the historical prediction information; and
the apparatus further comprises: an information sending module, configured to:
before the information receiving module receives the current prediction information that is sent by the first node performing information prediction in the communication network and that corresponds to each prediction model in the at least one prediction model, and the quality indicator of the current prediction information,
send a prediction evaluation indication to the first node, wherein the prediction evaluation indication indicates information about a requirement of the second node for a quality indicator of prediction information.

38. The apparatus according to claim 34, wherein the reference data comprises the prediction assistance information; and
the information application module is specifically configured to:
determine a prediction requirement for the scenario;
determine, for each prediction model based on a degree of matching between prediction assistance information corresponding to the prediction model and the prediction requirement, the current prediction information whose quality indicator satisfies the quality condition and that is in the current prediction information corresponding to each prediction model; and
perform the network management operation for the scenario based on the current prediction information whose quality indicator satisfies the quality condition.

39. A communication network, wherein the communication network comprises a first node performing information prediction and a second node using prediction information;
the first node is configured to: obtain reference data and current measurement information that match a network management scenario, wherein the reference data indicates prediction quality of at least one prediction model that matches the scenario; process the current measurement information by using each prediction model in the at least one prediction model, to obtain current prediction information corresponding to the prediction model; determine, based on the reference data, a quality indicator of the current prediction information corresponding to each of the at least one prediction model; and send the current prediction information corresponding to each prediction model and the quality indicator of the current prediction information to the second node in the communication network; and
the second node is configured to perform a network management operation for the scenario based on current prediction information whose quality indicator satisfies a quality condition and that is in the current prediction information corresponding to each prediction model.

40. The communication network according to claim 39, wherein the reference data comprises one of the following: a preset test set, a quality indicator of historical prediction information, the historical prediction information, and prediction assistance information, wherein the preset test set comprises test measurement information, test prediction information corresponding to the test measurement information, and actual information corresponding to the test prediction information; and the prediction assistance information indicates attribute information and/or a running environment of each prediction model.

41. An electronic device, comprising:
a processor and a memory, wherein the processor is connected to the memory;
the memory is configured to store one or more programs; and
when the one or more programs are executed by the one or more processors, the one or more processors are enabled to implement the method according to any one of claims 1 to 20.

42. A computer-readable storage medium, comprising a computer program, wherein when the computer program is run on an electronic device, the electronic device is enabled to perform the method according to any one of claims 1 to 20.

43. A chip, comprising one or more interface circuits and one or more processors, wherein the interface circuit is configured to: receive a signal from a memory of an electronic device, and send the signal to the processor, and the signal comprises computer instructions stored in the memory; and when the processor executes the computer instructions, the electronic device is enabled to perform the method according to any one of claims 1 to 20.

44. A computer program product, comprising a computer program, wherein when the computer program is executed by an electronic device, the electronic device is enabled to perform the method according to any one of claims 1 to 20.
